# EUROPEAN PATENT APPLICATION

(11) **EP 3 522 387 A1**
(43) Date of publication of application: **07.08.2019**
(21) Application number: 17854581.0
(22) Date of filing: 07.08.2017
(51) Int. Cl.: H04B 7/0408

(54) **METHOD AND DEVICE FOR SCANNING AND SWITCHING WAVE BEAM**

(30) Priority: 30.09.2016 CN 201610877414
(71) Applicant: ZTE Corporation, Shenzhen, Guangdong 518057 (CN)
(72) Inventor: GAO, Bo, Shenzhen Guangdong 518057 (CN); LU, Zhaohua, Shenzhen Guangdong 518057 (CN); LI, Yu Ngok, Shenzhen Guangdong 518057 (CN); CHEN, Yijian, Shenzhen Guangdong 518057 (CN); WU, Hao, Shenzhen Guangdong 518057 (CN); YUAN, Yifei, Shenzhen Guangdong 518057 (CN); WANG, Xinhui, Shenzhen Guangdong 518057 (CN)
(74) Representative: Studio Torta S.p.A.
(86) International application number: PCT/CN2017/096199
(87) International publication number: WO 2018/059128

(57) **Abstract**

A method and a device for scanning and switching a wave beam, used in a transmission terminal of a reference signal. The method comprises: the transmission terminal notifying a reception terminal of the sequence number indicators of M wave beam groups, the M being an integer greater than or equal to 1, the sequence number indicators of the M wave beam groups being used for instructing the reception terminal of the reference signal to execute one or several of: the switching of a wave beam from a control channel and/or a data channel into a corresponding wave beam group; beam scanning of the corresponding wave beam group; a channel quality measurement of the corresponding beam group; and channel quality feedback of the corresponding wave beam group.

## Description

### TECHNICAL FIELD

The application relates to, but is not limited to, the field of communications, and more particularly, relates to a method and apparatus for scanning and switching beams.

### BACKGROUND

High frequency band with ultra-wide bandwidth (i.e., millimeter wave communication) has become an important direction for the development of mobile communications in the future, attracting the attention of the academic circles and the industrial circles around the world. In particular, the advantages of millimeter waves become more and more attractive when spectrum resources are increasingly congested and physical networks are heavily accessed. Corresponding standardization work has been developed in many standard organizations, such as Institute of Electrical and Electronics Engineers (IEEE) and 3rd Generation Partnership Project (3GPP). For example, in the 3GPP standard organization, high frequency communication will become an important innovation of 5G New Radio Access Technology (New RAT) due to the significant advantage of large bandwidth thereof.

However, the high frequency communication also faces the challenges of link attenuation, including large loss of propagation path, greater absorption of air (especially oxygen), and more significant effect of rain attenuation. Facing these challenges, a high frequency band communication system can take advantages of short wave length and easy antenna integration of the high frequency, and achieve high antenna gain and counteract signal transmission losses through multi-antenna array and beamforming schemes, so as to ensure link margin and improve communication robustness.

In the course of antenna weight (also known as precoding, and beam) training, the high frequency transmitting terminal transmits a training pilot, while a receiving terminal receives a channel and performs channel estimation. Then, a high frequency training receiving terminal needs to feed channel state information back to a training transmitting terminal, so that the transmitting and receiving terminals can find multiple sets of transmitting and receiving terminal antenna weight pairs, which can be used for multi-channel data transmission, from selectable transmitting and receiving terminal antenna weight pairs, so as to improve the overall spectral efficiency.

Beam scanning is developed without priori information or optimal beam feedback information configured on the basis of last moment, so the beam scanning may be only developed in the current beam and its adjacent beams. Although the beams can be refined step by step, it is difficult to determine measurements in other independent paths. In such a case, on the one hand, beam training in other paths, and selecting of a backup path or effective space division multiplexing will be limited; on the other hand, in the data transmission phase, once the path is occluded, it is difficult to retrain other paths to facilitate transmitting the data without interruption.

### SUMMARY

The following is an overview of the subject detailed herein. This summary is not intended to limit the scope of protection of the claims.

The embodiments of the present disclosure provide a method and apparatus for scanning and switching beams.

A method for scanning and switching beams, applied to a reference signal transmitting terminal, includes:
notifying, by the transmitting terminal, M beam group number indicators to a receiving terminal, wherein M is an integer greater than or equal to 1, and the M beam group number indicators are used to instruct the reference signal receiving terminal to execute one or more of the followings:
switching of a beam from a control channel to a corresponding beam group;
switching of a beam from a data channel to a corresponding beam group;
switching of beams from a control channel and a data channel to corresponding beam groups;
beam scanning in a corresponding beam group;
channel quality measurement in a corresponding beam group; and
channel quality feedback in a corresponding beam group.

The method, before notifying the M beam group number indicators to the receiving terminal, further includes: executing beam grouping to obtain a grouping result, the grouping result containing the M beam group number indicators.

The method, before notifying the M beam group number indicators to the receiving terminal, further includes: receiving a beam grouping result from the receiving terminal, the grouping result containing the M beam group number indicators.

When the transmitting terminal notifies the M beam group number indicators to the receiving terminal, the method further includes: transmitting a request indicator of switching to a second type of beam groups; and meanwhile, keeping a first type of beam groups undertaking a data transmission service until the receiving terminal makes a response that the beam groups are or have been switched to the second type of beam groups; wherein the first type of beam groups are beam groups that are currently undertaking the data transmission service, and the first type of beam groups include K2 beam groups; and the second type of beam groups correspond to the M beam group number indicators, the second type of beam groups include K1 beam groups, K1 and K2 are integers no less than 1, and K1 is no greater than M.

When the transmitting terminal notifies the M beam group number indicators to the receiving terminal, the method further includes: transmitting an indicator of beam scanning of a second type of beam groups; and meanwhile, keeping a first type of beam groups undertaking a data transmission service until the receiving terminal makes a response that the beam groups are or have been switched to the second type of beam groups; wherein the first type of beam groups are beam groups that are currently undertaking the data transmission service, and the first type of beam groups include K2 beam groups; and the second type of beam groups correspond to the M beam group number indicators, the second type of beam groups include K1 beam groups, K1 and K2 are integers no less than 1, and K1 is no greater than M.

When the transmitting terminal notifies the M beam group number indicators to the receiving terminal, the method further includes: keeping a first type of beam groups undertaking a data transmission service until the receiving terminal makes a response that the beam groups are or have been switched to the second type of beam groups; wherein the first type of beam groups are beam groups that are currently undertaking the data transmission service, and the first type of beam groups include K2 beam groups; and the second type of beam groups correspond to the M beam group number indicators, the second type of beam groups include K1 beam groups, K1 and K2 are integers no less than 1, and K1 is no greater than M.

The method further includes: transmitting, by the transmitting terminal, a reference signal through the second type of beam groups and beams adjacent to the second type of beam groups, the reference signal being used for channel quality measurement in the second type of beam groups and in the beams adjacent to the second type of beam groups; or,
transmitting, by the transmitting terminal, a reference signal through the second type of beam groups, the reference signal being used for channel quality measurement in the second type of beam groups; or,
transmitting, by the transmitting terminal, a reference signal through the beams adjacent to the second type of beam groups, the reference signal being used for channel quality measurement in the beams adjacent to the second type of beam groups.

The beam scanning includes transmitting a beam scanning control signal, and the beam scanning control signal includes one of the followings:
an indicator for enabling beam scanning at the transmitting terminal, and an indicator for the number of scanned beams;
an indicator for enabling beam scanning at the receiving terminal, and an indicator for the number of scanned beams;
an indicator for enabling joint beam scanning jointly enabled at the transmitting and receiving terminals, a corresponding relation between scanning transmitting beams and scanning receiving beams, and an indicator for the number of scanned beams;
an indicator for enabling scanning at the transmitting terminal, an indicator for the number of scanned beams, and a binding relation between the beams scanned and a corresponding antenna port;
an indicator for enabling beam scanning at the receiving terminal, an indicator for the number of scanned beams, and a binding relation between the beams scanned and a corresponding antenna port; and
an indicator for enabling joint beam scanning at the transmitting and receiving terminals, a corresponding relation between scanning transmitting beams and scanning receiving beams, an indicator for the number of scanned beams, and a binding relation between the beams scanned and a corresponding antenna port.

The binding relation between the beams scanned and the corresponding antenna port is expressed in one of the following ways:
being expressed as information of the corresponding relation between the beams scanned and the antenna port, the corresponding relation between the beams scanned and the antenna port including a situation that all the beams scanned use the same antenna port; and
mapping the corresponding relation between the beams scanned and the antenna port through a specified function and configuration parameters.

The method further includes: instructing, by the transmitting terminal, the receiving terminal to switch receiving beams to K beam groups, wherein K is an integer greater than or equal to 1, and M is greater than or equal to K.

An apparatus for scanning and switching beams, applied to a reference signal transmitting terminal, includes:
a first notifying unit configured to notify M beam group number indicators to a receiving terminal, wherein M is an integer greater than or equal to 1, and the M beam group number indicators are used to instruct the receiving terminal to execute one or more of the followings:
switching of a beam from a control channel to a corresponding beam group;
switching of a beam from a data channel to a corresponding beam group;
switching of beams from a control channel and a data channel to corresponding beam groups;
beam scanning in the corresponding beam group;
channel quality measurement in the corresponding beam group; and
channel quality feedback in the corresponding beam group.

The apparatus further includes: a first grouping unit configured to execute beam grouping to obtain a grouping result, the grouping result containing the M beam group number indicators; or, a first receiving unit configured to receive a beam grouping result from the receiving terminal, the grouping result containing the M beam group number indicators.

The first notifying unit is further configured to transmit an indicator of beam scanning of a second type of beam groups when notifying the M beam group number indicators to the receiving terminal, or transmit an indicator of beam scanning of a second type of beam groups when notifying the M beam group number indicators to the receiving terminal; and
the apparatus further includes: a control unit configured to keep a first type of beam groups undertaking a data transmission service until the receiving terminal makes a response that the beam groups are or have been switched to the second type of beam groups;
wherein the first type of beam groups are beam groups that are currently undertaking the data transmission service, and the first type of beam groups include K2 beam groups; the second type of beam groups correspond to the M beam group number indicators, the second type of beam groups include K1 beam groups, K1 and K2 are integers no less than 1, and K1 is no greater than M.

The notifying unit is further configured to:
transmit a reference signal through the second type of beam groups and/or beams adjacent to the second type of beam groups, the reference signal being used for channel quality measurement in the second type of beam groups and/or in the beams adjacent to the second type of beam groups; or,
transmit a reference signal through the second type of beam groups, the reference signal being used for channel quality measurement in the second type of beam groups; or,
transmit a reference signal through the beams adjacent to the second type of beam groups, the reference signal being used for channel quality measurement in the beams adjacent to the second type of beam groups.

An apparatus for scanning and switching beams, includes: a processor and a memory, wherein the apparatus is applied to a reference signal transmitting terminal, and the memory stores a computer-executable instruction which, when being executed by the processor, implements the following method:
notifying M beam group number indicators to a receiving terminal, wherein M is an integer greater than or equal to 1, and the M beam group number indicators are used to instruct the receiving terminal to execute one or more of the followings:
switching of a beam from a control channel to a corresponding beam group;
switching of a beam from a data channel to a corresponding beam group;
switching of beams from a control channel and a data channel to corresponding beam groups;
beam scanning in a corresponding beam group;
channel quality measurement in a corresponding beam group; and
channel quality feedback in a corresponding beam group.

A method for scanning and switching beams, applied to a reference signal receiving terminal, includes:
executing, by the receiving terminal, one of the followings by using beam groups corresponding to M beam group number indicators:
switching of a beam from a control channel to a corresponding beam group;
switching of a beam from a data channel to a corresponding beam group;
switching of beams from a control channel and a data channel to corresponding beam groups;
beam scanning in a corresponding beam group;
channel quality measurement in a corresponding beam group; and
channel quality feedback in a corresponding beam group;
wherein the M beam group number indicators are notified to the receiving terminal by a reference signal transmitting terminal, and M is an integer greater than or equal to 1.

The receiving terminal feeds a response message back to the transmitting terminal using one of the following beam groups:
beam groups used before carrying the M beam group number indicators;
M1 beam groups corresponding to the M beam group number indicators, wherein M1 is an integer greater than or equal to 1, and is less than or equal to M; and
a first beam group in the M beam groups of the M beam group number indicators.

A carrying manner of the beam group number indicators in the response message includes one of the followings:
carrying information of the beam group number indicators in the response message; and
being indicated by a location where a time-frequency resource carrying the beam group number is located or by a designated sequence.

The response message contains an effective time for executing corresponding instructions of the M beam group number indicators.

The receiving terminal periodically feeds the response message back to the transmitting terminal; or, the receiving terminal feeds the response message back to the transmitting terminal after the receiving terminal is triggered.

The method, before the using the beam groups corresponding to the M beam group number indicators, further includes: executing, by the receiving terminal, beam grouping, and notifying a grouping result to the transmitting terminal, the grouping result containing the M beam group number indicators.

The channel quality measurement in the corresponding beam group includes: receiving a reference signal transmitted by the transmitting terminal by using the beam groups corresponding to the M beam groups, and measuring channels in the M beam groups according to the reference signal.

The method, before the beam scanning in the corresponding beam group, further includes: configuring receiving beam groups for beam scanning according to the M beam group number indicators; wherein the M beam group number indicators are carried in downlink control information, uplink control information or media access control frames.

The channel quality feedback in the corresponding beam group includes: feeding beam measurement results of all the M beam groups or K3 beam groups in the M beam groups back to the transmitting terminal, wherein K3 is an integer greater than or equal to 1, and is less than M.

An apparatus for scanning and switching beams, applied to a reference signal receiving terminal, includes:
a first executing unit configured to execute one of the followings by using the beam groups corresponding to the M beam group number indicators:
switching of a beam from a control channel to a corresponding beam group;
switching of a beam from a data channel to a corresponding beam group;
switching of beams from a control channel and a data channel to corresponding beam groups;
beam scanning in the corresponding beam group;
channel quality measurement in the corresponding beam group; and
channel quality feedback in the corresponding beam group;
wherein the M beam group number indicators are notified to the receiving terminal by a reference signal transmitting terminal, and M is an integer greater than or equal to 1.

The apparatus further includes: a first transmitting unit configured to feed a response message back to the transmitting terminal by using one of the following beam groups:
beam groups used before carrying the M beam group number indicators;
M1 beam groups corresponding to the M beam group number indicators, wherein M1 is an integer greater than or equal to 1, and is less than or equal to M; and
a first beam group in the M beam groups of the M beam group number indicators.

The apparatus further includes: a second grouping unit configured to execute beam grouping, wherein:
the first transmitting unit is further configured to notify a grouping result obtained by the second grouping unit to the transmitting terminal, the grouping result containing the M beam group number indicators.

An apparatus for scanning and switching beams, includes: a processor and a memory, wherein the apparatus is applied to a reference signal receiving terminal, and the memory stores a computer-executable instruction which, when being executed by the processor, implements the following method:
executing one of the followings by using beam groups corresponding to M beam group number indicators:
switching of a beam from a control channel to a corresponding beam group;
switching of a beam from a data channel to a corresponding beam group;
switching of beams from a control channel and a data channel to corresponding beam groups;
beam scanning in the corresponding beam group;
channel quality measurement in the corresponding beam group; and
channel quality feedback in the corresponding beam group;
wherein the M beam group number indicators are notified to the receiving terminal by a reference signal transmitting terminal, and M is an integer greater than or equal to 1.

A method for responding, applied to a terminal, includes:
receiving, by the terminal, a signaling transmitted by a base station, generating a first effective time of the signaling, and transmitting the first effective time to the base station;
the signaling carrying M beam group number indicators, wherein M is an integer greater than or equal to 1, and the M beam group number indicators are used to indicate the terminal to execute one or more of the followings:
   switching of a beam from a control channel to a corresponding beam group;
   switching of a beam from a data channel to a corresponding beam group;
   switching of beams from a control channel and a data channel to corresponding beam groups;
   beam scanning in a corresponding beam group;
   channel quality measurement in a corresponding beam group; and
   channel quality feedback in a corresponding beam group.

The signaling is: a beam measurement signaling, a beam switching signaling, or a beam quality feedback signaling.

Resource information used by the first effective time is carried in the signaling.

The signaling carries a second effective time suggested by the base station, and when the second effective time is less than the first effective time, the terminal transmits the first effective time to the base station before the second effective time.

The signaling carries a second effective time suggested by the base station, and when the second effective time is greater than the first effective time, the terminal stops transmitting the first effective time to the base station.

Transmitting the first effective time to the base station includes one of the followings:
carrying the first effective time in a notification message in the form of information, and transmitting the notification message to the base station; and
indicating the first effective time by a location where a time-frequency resource carrying the notification message is located or by a designated sequence.

An apparatus for responding, applied to a terminal, includes:
a second receiving unit configured to receive a signaling transmitted by a base station;
a first generating unit configured to generate a first effective time of the signaling; and
a second transmitting unit configured to transmit the first effective time to the base station;
wherein the signaling carries M beam group number indicators, wherein M is an integer greater than or equal to 1, and the M beam group number indicators are used to instruct the terminal to execute one or more of the followings:
   switching of a beam from a control channel to a corresponding beam group;
   switching of a beam from a data channel to a corresponding beam group;
   switching of beams from a control channel and a data channel to corresponding beam groups;
   beam scanning in a corresponding beam group;
   channel quality measurement in a corresponding beam group; and
   channel quality feedback in a corresponding beam group.

The signaling carries a second effective time suggested by the base station; and
the second transmitting unit is configured to transmit the first effective time to the base station before the second effective time when the second effective time is less than the first effective time, or stop transmitting the first effective time to the base station when the second transmitting unit is greater than the first effective time.

The second transmitting unit is configured to transmit the first effective time to the base station through one of the following manners:
carrying the first effective time in a notification message in the form of information, and transmitting the notification message to the base station; and
indicating the first effective time by a location where a time-frequency resource carrying the notification message is located or by a designated sequence.

An apparatus for responding, includes: a processor and a memory, wherein the apparatus is applied to a terminal, and the memory stores a computer-executable instruction which, when being executed by the processor, implements the following method:
receiving a signaling transmitted by a base station;
generating a first effective time of the signaling; and
transmitting the first effective time to the base station;
wherein the signaling carries M beam group number indicators, wherein M is an integer greater than or equal to 1, and the M beam group number indicators are used to indicate the terminal to execute one or more of the followings:
   switching of a beam from a control channel to a corresponding beam group;
   switching of a beam from a data channel to a corresponding beam group;
   switching of beams from a control channel and a data channel to corresponding beam groups;
   beam scanning in a corresponding beam group;
   channel quality measurement in a corresponding beam group; and
   channel quality feedback in a corresponding beam group.

A method for feeding back antenna configuration information, applied to a terminal, includes: feeding back, by the terminal, an antenna parameter to a base station side.

The antenna parameter is used to configure an uplink codebook which is used to generate at least one of a receiving beam, a receiving beam group, a transmitting beam and a transmitting beam group.

The antenna parameter includes one or a combination of more than one of the followings:
1) the number of antenna ports;
2) the dimension of a 2-D antenna group codebook and the number of the 2-D antenna group codebooks;
3) the dimension of a 2-D beam codebook and the number of the 2-D beam codebooks in the antenna group;
4) the dimension of a large bandwidth-oriented codebook and the number of the large bandwidth-oriented codebooks;
5) the dimension of a small bandwidth-oriented codebook and the number of the small bandwidth-oriented codebooks;
6) the dimension of a polarization-oriented codebook and the number of the polarization-oriented codebooks;
7) precision of codebook quantization;
8) whether a downlink received codebook being associated with all or any codebook in 2) to 5);
9) the number of antenna panels, the number of rows of the antenna panels, the number of rows and columns of the antenna panels, and a directional topology shape;
10) the number of rows of antenna elements in the antenna panels;
11) the number of columns of antennas in the antenna panels; and
12) a polarization feature of the antennas.

The precision of codebook quantization includes an oversampling size of a DFT codebook.

The method further includes: executing codebook grouping, the codebook grouping being indicated by a codebook grouping indicator, and all or some of codebooks in the same codebook group are used for receiving or transmitting a transmission.

An apparatus for feeding back antenna configuration information, applied to a terminal, includes :a third transmitting unit configured to feed an antenna parameter back to a base station side.

An apparatus for feeding back antenna configuration information, includes: a processor and a memory, wherein the apparatus is applied to a terminal, and the memory stores a computer-executable instruction which, when being executed by the processor, implements the following method:
feeding an antenna parameter back to a base station side.

A method for configuring an antenna, applied to a base station, includes:
receiving an antenna parameter fed back by a terminal; and
configuring an antenna according to the antenna parameter.

Configuring the antenna includes one or a combination of more than one of the followings:
setting an uplink beam and a downlink beam of the terminal to be the same, or allowing a difference of the angle between the uplink beam and the downlink beam to be smaller than a threshold;
configuring an uplink codebook of the terminal; and
setting a binding relation between the uplink beam of the terminal and the uplink codebook.

Configuring the uplink codebook of the terminal is implemented through one of the following manners:
feeding back a codebook set of the uplink codebook to the terminal; and
indicating a sub-codebook for forming the uplink codebook and a method of synthesizing the codebook thereof to the terminal.

Setting the binding relation between the uplink beam of the terminal and the uplink codebook includes:
reconfiguring elements of the uplink codebook based on uplink beam selection information; and
setting a range of choice of at least one of the uplink codebook and the sub-codebook based on the uplink beam selection information, the sub-codebook being used for forming the uplink codebook.

An apparatus for configuring an antenna, applied to a base station, includes:
a third receiving unit configured to receive an antenna parameter fed back by a terminal; and
a configuring unit configured to configure an antenna according to the antenna parameter.

An apparatus for configuring an antenna, includes: a processor and a memory, wherein the apparatus is applied to a base station, and the memory stores a computer-executable instruction which, when being executed by the processor, implements the following method:
receiving an antenna parameter fed back by a terminal; and
configuring an antenna according to the antenna parameter.

Moreover, the embodiments of the present disclosure also provide a computer readable storage medium storing a computer-executable instruction which, when being executed by a processor, implements one of the above-mentioned methods for scanning and switching beams.

Moreover, the embodiments of the present disclosure also provide a computer readable storage medium storing a computer-executable instruction which, when being executed by a processor, implements another of the above-mentioned methods for scanning and switching beams.

Moreover, the embodiments of the present disclosure also provide a computer readable storage medium storing a computer-executable instruction which, when being executed by a processor, implements the above-mentioned method for responding.

The embodiments of the present disclosure also provide a computer readable storage medium storing a computer-executable instruction which, when being executed, implements the above-mentioned method for feeding back an antenna parameter.

Moreover, the embodiments of the present disclosure also provide a computer readable storage medium storing a computer-executable instruction which, when being executed implements the above-mentioned method for configuring an antenna.

Through the present application, the reference signal transmitting terminal can instruct the receiving terminal to receive the beam groups by an explicit or implicit way, and instruct the receiving terminal to execute at least one of the corresponding beam scanning and channel measurement, thus realizing the beam training and channel quality measurement on the transmitting and receiving beams under a specific independent path by the transmitting terminal and the receiving terminal. In this way, on the one hand, the beam refining or beam tracking for each independent path can be realized; and on the other hand, when the transmission path is blocked, the transceiver can make measurement and maintenance with respect to other beam groups in time to support effective beam switching.

The present application is particularly suitable for beam scanning in high-frequency 5G mobile communication or millimeter wave communication scenes.

Other aspects will become apparent upon reading and understanding the drawings and detailed description.

### BRIEF DESCRIPTION OF THE DRAWINGS

Fig. 1 is a schematic diagram illustrating a composition structure of an apparatus for scanning and switching beams in a first embodiment of the present application;
Fig. 2 is a schematic diagram illustrating a composition structure of an apparatus for scanning and switching beams in a second embodiment of the present application;
Fig. 3 is a schematic diagram illustrating a composition structure of an apparatus for responding in a third embodiment of the present application;
Fig. 4 is a schematic diagram illustrating a composition structure of an apparatus for feeding back an antenna parameter in a fourth embodiment of the present application;
Fig. 5 is a schematic diagram illustrating a composition structure of an apparatus for configuring an antenna in the fourth embodiment of the present application;
Fig. 6 is a schematic diagram illustrating a flow chart of configuring an antenna in the fourth embodiment of the present application;
Fig. 7 is a schematic diagram illustrating a structure of a hybrid precoding (beamforming) transceiver related in the present application;
Fig. 8 is a schematic diagram of an effective time of a signaling carried by a notification message;
Fig. 9 is a schematic diagram of transmitting a response message after switching to a designated beam group;
Fig. 10 is a schematic diagram of beam groups related in the present application;
Fig. 11 is an embodiment of beam groups according to the present application;
Fig. 12 is a schematic diagram of a method for scanning beams according to the present application;
Fig. 13 is a schematic diagram illustrating flow charts of precoding (beam) training and channel state information feedback according to the present application;
Fig. 14 is a schematic diagram illustrating a frame structure of the present application and a mapping relationship between a control signal and a reference signal;
Fig. 15 is an embodiment of the present application on downlink receiving beam scanning under a second type of beam groups oriented to specific beam groups;
Fig. 16 is an embodiment of the present application on downlink transmitting beam scanning under the second type of beam groups oriented to specific beam groups;
Fig. 17 is an embodiment of the present application on uplink receiving beam scanning under the second type of beam groups oriented to specific beam groups;
Fig. 18 is an embodiment of the present application on downlink transmitting beam scanning under the second type of beam groups oriented to specific beam groups;
Fig. 19 is a schematic diagram of a transmission at transmitting and receiving terminals where channel quality deteriorates due to blocking; and
Fig. 20 is a schematic diagram of a transmission at the transmitting and receiving terminals after beam scanning in the beam groups.

### DETAILED DESCRIPTION

The embodiments of the present application will be described in detail hereinafter with reference to the accompanying drawings.

The steps shown in the flow chart of the drawings may be performed in a computer system of a set of computer-executable instructions. Also, although a logical sequence is shown in the flow chart, in some cases, the steps shown or described may be performed in a sequence different from that herein.

### First embodiment

The present application provides a method for scanning and switching beams, applied to a reference signal transmitting terminal, including: notifying, by the transmitting terminal, M beam group number indicators to a receiving terminal, M being an integer greater than or equal to 1, and the M beam group number indicators being used to instruct the reference signal receiving terminal to execute one or more of the followings:
switching of a beam from a control channel and/or a data channel to a corresponding beam group;
beam scanning in the corresponding beam group;
channel quality measurement in the corresponding beam group; and
channel quality feedback in the corresponding beam group.

In some implementation manners, the method, before notifying the M beam group number indicators to the receiving terminal, may further include: executing beam grouping to obtain a grouping result, the grouping result containing the M beam group number indicators.

In some implementation manners, the method, before notifying the M beam group number indicators to the receiving terminal, may further include: receiving a beam grouping result from the receiving terminal, the grouping result containing the M beam group number indicators.

In some implementation manners, when the transmitting terminal notifies the M beam group number indicators to the receiving terminal, the method further includes: transmitting a request indicator of switching to a second type of beam groups; and meanwhile, keeping a first type of beam groups undertaking a data transmission service until the receiving terminal makes a response that the beam groups are or have been switched to the second type of beam groups; wherein the first type of beam groups are beam groups that are currently undertaking the data transmission service, and the first type of beam groups include K2 beam groups; and the second type of beam groups correspond to the M beam group number indicators, the second type of beam groups include K1 beam groups, K1 and K2 are integers no less than 1, and K1 is no greater than M.

In some implementation manners, when the transmitting terminal notifies the M beam group number indicators to the receiving terminal, the method further includes: transmitting an indicator of beam scanning of a second type of beam groups; and meanwhile, keeping a first type of beam groups undertaking a data transmission service until the receiving terminal makes a response that the beam groups are or have been switched to the second type of beam groups; wherein the first type of beam groups are beam groups that are currently undertaking the data transmission service, and the first type of beam groups include K2 beam groups; and the second type of beam groups correspond to the M beam group number indicators, the second type of beam groups include K1 beam groups, K1 and K2 are integers no less than 1, and K1 is no greater than M.

In some implementation manners, when the transmitting terminal notifies the M beam group number indicators to the receiving terminal, the method further includes: keeping a first type of beam groups undertaking a data transmission service until the receiving terminal makes a response that the beam groups are or have been switched to the second type of beam groups; wherein the first type of beam groups are beam groups that are currently undertaking the data transmission service, and the first type of beam groups include K2 beam groups; and the second type of beam groups correspond to the M beam group number indicators, the second type of beam groups include K1 beam groups, K1 and K2 are integers no less than 1, and K1 is no greater than M.

Beam directions and beam widths of the first type of beam groups are different from those of some or all of the second type of beam groups.

In practical application, when the transmitting terminal transmits set information of the second type of beam groups, transmits the indicator of beam scanning of the second type of beam groups, transmits the request indicator of switching to the second type of beam groups, responds to switching to the second type of beam groups or between any two of the above, the first type of beam groups can keep undertaking the data transmission service until the receiving terminal makes a response that the beam groups are or have been switched to the second type of beam groups.

In some implementation manners, the method may further include: a situation that the transmitting terminal and the receiving terminal jointly execute beam scanning and measurement to the transmitting and receiving terminals of the M beam group number.

In some implementation manners, the method may further include: transmitting, by the transmitting terminal, a reference signal through the second type of beam groups and/or beams adjacent to the second type of beam groups, the reference signal being used for channel quality measurement in the second type of beam groups and/or in the beams adjacent to the second type of beam groups.

In some implementation manners, the beam scanning includes transmitting a beam scanning control signal, and the beam scanning control signal includes:
an indicator for enabling beam scanning at the transmitting terminal, and an indicator for the number of scanned beams;
an indicator for enabling beam scanning at the receiving terminal, and an indicator for the number of scanned beams;
an indicator for enabling joint beam scanning at the transmitting and receiving terminals, a corresponding relation between scanning transmitting beams and scanning receiving beams, and an indicator for the number of scanned beams;
an indicator for enabling beam scanning at the transmitting terminal, an indicator for the number of scanned beams, and a binding relation between the beams scanned and a corresponding antenna port;
an indicator for enabling beam scanning at the receiving terminal, an indicator for the number of scanned beams, and a binding relation between the beams scanned and a corresponding antenna port; and
an indicator for enabling joint beam scanning at the transmitting receiving terminals, a corresponding relation between scanning transmitting beams and scanning receiving beams, an indicator for the number of scanned beams, and a binding relation between the beams scanned and a corresponding antenna port.

In practical application, the binding relation between the beams scanned and the corresponding antenna port is expressed in one of the following ways: 1) an explicit manner: being expressed as information of the corresponding relation between the beams scanned and the antenna port, the corresponding relation between the beams scanned and the antenna port including a situation that all the beams scanned use the same antenna port; and 2) implicit manner: mapping the corresponding relation between the beams scanned and the antenna port through a specified function and configuration parameters.

In some implementation manners, the method may further include: instructing, by the transmitting terminal, the receiving terminal to switch receiving beams to K beam groups, wherein K is an integer greater than or equal to 1, and M is greater than or equal to K.

In the present application, the reference signal includes such signals like a Demodulation Reference Signal (DMRS), a Channel State Information Reference Signal (CSI-RS), a Cell Specific Reference Signal (CRS), a Sounding Reference Signal (SRS), etc.

In the present application, the beam can be a resource (e.g., originating precoding, terminating precoding, antenna port, antenna weight vector, antenna weight matrix, etc.), and a beam ID can be replaced by a resource ID because the beam can be bound with some time-frequency code resources for transmission. The beam can also be a transmission (transmitting/receiving) manner; and the transmission manner may include space division multiplexing, frequency domain/time domain diversity, etc.

In the present application, the beam grouping refers to grouping beams which have the same channel characteristics and/or transmission schemes into a set, and the grouping criteria include any one or a combination of several of the following modes:
grouping according to a received signal power;
grouping according to a horizontal transmitting azimuth;
grouping according to a vertical transmitting azimuth;
grouping according to a horizontal receiving azimuth;
grouping according to a vertical receiving azimuth;
grouping according to a cluster arrival time;
grouping according to a received resource corresponding to the resources;
grouping according to a predetermined multiplexing manner;
grouping according to a Timing Advance (TA) parameter;
grouping according to a Cyclic Prefix (CP) length;
grouping according to a space division multiplexing manner; and
grouping according to a quasi-co-location relation.

An extreme case of the beam grouping is that the number of beams in each group is 1.

The channel characteristics include physical propagation channel characteristics, such as the horizontal transmitting azimuth, the vertical transmitting azimuth, the horizontal receiving azimuth, the vertical receiving azimuth, etc., as well as radio frequency and baseband circuit characteristics, such as antenna array element pattern, antenna placement, baseband time offset and frequency offset, etc.

In the present application, the beam scanning refers to the process in which the reference signal transmitting terminal adjusts transmitting and/or receiving beams to the reference signal receiving terminal in sequence, transmits and receives the reference signal, and performs channel quality measurement.

In an implementation manner, the beam scanning and/or channel measurement is controlled by transmitting a beam scanning control signal, and the beam scanning control signal includes but is not limited to:
#1 an indicator for enabling beam scanning at the transmitting terminal, and an indicator for the number of scanned beams (or an abstract indicator for the number of scanned beams);
#2 an indicator for enabling beam scanning at the receiving terminal, and an indicator for the number of scanned beams (or an abstract indicator for the number of scanned beams);
#3 an indicator for enabling joint beam scanning at the transmitting and receiving terminals, a corresponding relation between scanning transmitting beams and scanning receiving beams, and an indicator for the number of scanned beams (or an abstract indicator for the number of scanned beam);
#4 an indicator for enabling beam scanning at the transmitting terminal, an indicator for the number of scanned beams (or an abstract indicator for the number of scanned beams), and a binding relation between the beams scanned and a corresponding antenna port;
#5 an indicator for enabling beam scanning at the receiving terminal, an indicator for the number of scanned beams (or an abstract indicator for the number of scanned beams), and a binding relation between the beams scanned and a corresponding antenna port; and
#6 an indicator for enabling joint beam scanning at the transmitting receiving terminals, a corresponding relation between scanning transmitting beams and scanning receiving beams, an indicator for the number of scanned beams (or an abstract indicator for the number of scanned beam), and a binding relation between the beams scanned and a corresponding antenna port.

The binding relation between the beams scanned and the corresponding antenna port may possibly include the followings:
being explicitly expressed, the corresponding relation between the beams scanned and the antenna port including a situation that all the beams scanned use the same antenna port; and
mapping the corresponding relation between the beams scanned and the antenna port through a specified function and configuration parameters.

The beam group number indicators and the beam scanning control signal can be transmitted through downlink control information carried by the reference signal transmitting terminal, or uplink control information, or media access control frames.

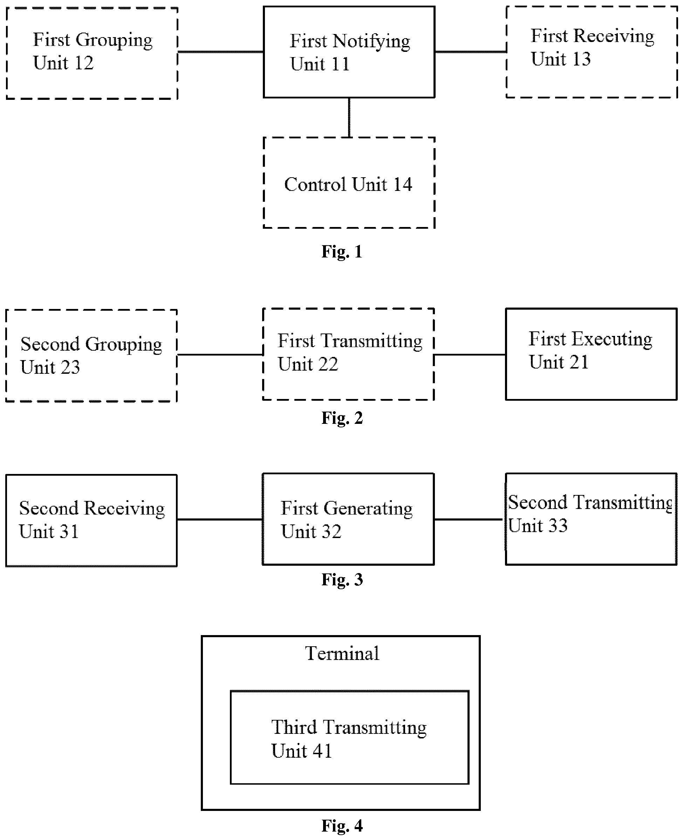

Accordingly, as shown in Fig. 1, the present application further provides an apparatus for scanning and switching beams, applied to a reference signal transmitting terminal, including:
a first notifying unit 11 configured to notify M beam group number indicators to a receiving terminal, M being an integer greater than or equal to 1, and the M beam group number indicators being used to instruct the receiving terminal to execute one or more of the followings: 1) switching of a beam from a control channel and/or a data channel to a corresponding beam group; 2) beam scanning in the corresponding beam group; 3) channel quality measurement in the corresponding beam group; and 4) channel quality feedback in the corresponding beam group.

In some implementation manners, the apparatus may further include: a first grouping unit 12 configured to execute beam grouping to obtain a grouping result, the grouping result containing the M beam group number indicators.

In some implementation manners, the apparatus may further include: a first receiving unit 13 configured to receive a beam grouping result from the receiving terminal, the grouping result containing the M beam group number indicators.

In some implementation manners, the first notifying unit 11 is further configured to transmit an indicator of beam scanning of a second type of beam groups when notifying the M beam group number indicators to the receiving terminal, or transmit an indicator of beam scanning of a second type of beam groups when notifying the M beam group number indicators to the receiving terminal.

In some implementation manners, the apparatus may further include: a control unit 14 which may be configured to keep a first type of beam groups undertaking a data transmission service until the receiving terminal makes a response that the beam groups are or have been switched to the second type of beam groups; wherein the first type of beam groups are beam groups that are currently undertaking the data transmission service, and the first type of beam groups include K2 beam groups; the second type of beam groups correspond to the M beam group number indicators, the second type of beam groups include K1 beam groups, K1 and K2 are integers no less than 1, and K1 is no greater than M.

In some implementation manners, the notifying unit 11 may further be configured to transmit a reference signal through the second type of beam groups and/or beams adjacent to the second type of beam groups, the reference signal being used for channel quality measurement in the second type of beam groups and/or in the beams adjacent to the second type of beam groups.

Accordingly, the present application further provides an apparatus for scanning and switching beams, including: a processor and a memory, wherein the apparatus is applied to a reference signal transmitting terminal, and the memory stores a computer-executable instruction which, when being executed by the processor, implements the following method:
notifying M beam group number indicators to a receiving terminal, M being an integer greater than or equal to 1, and the M beam group number indicators being used to instruct the receiving terminal to execute one or more of the followings:
switching of a beam from a control channel and/or a data channel to a corresponding beam group;
beam scanning in the corresponding beam group;
channel quality measurement in the corresponding beam group; and
channel quality feedback in the corresponding beam group.

The above-mentioned apparatus for scanning and switching beams provided by the present embodiment can be used for performing all the processes of the above described methods, and will not be elaborated herein.

According to the method for scanning and switching beams in the present embodiment, the reference signal transmitting terminal can instruct the receiving terminal to receive the beam groups by an explicit or implicit way, and instruct the receiving terminal to execute the corresponding beam scanning and/or channel measurement, thus realizing the beam training and channel quality measurement on the transmitting and receiving beams under a specific independent path by the transmitting terminal and the receiving terminal. In this way, on the one hand, the beam refining or beam tracking for each independent path can be realized; on the other hand, when the transmission path is blocked, the transceiver can make measurement and maintenance with respect to other beam groups in time to support effective beam switching. The method and the apparatus according to the present embodiment are particularly suitable for beam scanning in high-frequency 5G mobile communication or millimeter wave communication scenes.

### Second embodiment

The embodiment provides a method for scanning and switching beams, applied to a reference signal receiving terminal, including:
executing, by the receiving terminal, one of the followings by using beam groups corresponding to M beam group number indicators:
switching of a beam from a control channel and/or a data channel to a corresponding beam group;
beam scanning in the corresponding beam group;
channel quality measurement in the corresponding beam group; and
channel quality feedback in the corresponding beam group;
wherein the M beam group number indicators are notified to the receiving terminal by a reference signal transmitting terminal, and M is an integer greater than or equal to 1.

In some implementation manners, the receiving terminal feeds a response message back to the transmitting terminal using one of the following beam groups:
beam groups used before carrying the M beam group number indicators;
M1 beam groups corresponding to the M beam group number indicators, wherein M1 is an integer greater than or equal to 1, and is less than or equal to M; and
a first beam group in the M beam groups of the M beam group number indicators.

In some implementation manner, a carrying manner of the beam group number indicators in the response message includes one of the followings: 1) carrying information of the beam group number indicators in the response message; and 2) being indicated by a location where a time-frequency resource carrying the beam group number is located or by a designated sequence. The response information may indicate a time for executing beam switching at the transmitting and receiving terminals, for example, switching in next subframe, or executing after a certain time unit (for example, Transmission Time Interval (TTI)).

In some implementation manners, the response message contains an effective time for executing corresponding instructions of the M beam group number indicators.

In some implementation manners, the receiving terminal can periodically feed the response message back to the transmitting terminal; or, the receiving terminal can feed the response message back to the transmitting terminal after the receiving terminal is triggered.

In some implementation manner, the method, before the using the beam groups corresponding to the M beam group number indicators, may further include: executing, by the receiving terminal, beam grouping, and notifying a grouping result to the transmitting terminal, the grouping result containing the M beam group number indicators.

In some implementation manners, the channel quality measurement in the corresponding beam group may include: receiving a reference signal transmitted by the transmitting terminal by using the beam groups corresponding to the M beam groups, and measuring channels in the M beam groups according to the reference signal.

In some implementation manners, even if in the same beam group, the receiving terminal can adjust the receiving beams according to the beam scanning control signal and self-demands, rather than a mandatory-binding relation.

In some implementation manners, the method, before the beam scanning in the corresponding beam group, further includes: configuring receiving beam groups for beam scanning according to the M beam group number indicators; wherein the M beam group number indicators are carried in downlink control information, uplink control information or media access control frames.

In some implementation manners, the method may further include: in the same beam group, adjusting the receiving beams according to the beam scanning control signal and self-demands, rather than a mandatory-binding relation.

In some implementation manners, the channel quality feedback in the corresponding beam group includes: feeding a beam measurement result of any beam group in the M beam groups back to the transmitting terminal.

Accordingly, as shown in Fig. 2, the present embodiment further provides an apparatus for scanning and switching beams, applied to a reference signal receiving terminal, including:
a first executing unit 21 configured to execute one of the followings by using the beam groups corresponding to the M beam group number indicators:
switching of a beam from a control channel and/or a data channel to a corresponding beam group;
beam scanning in the corresponding beam group;
channel quality measurement in the corresponding beam group; and
channel quality feedback in the corresponding beam group;
wherein the M beam group number indicators are notified to the receiving terminal by a reference signal transmitting terminal, and M is an integer greater than or equal to 1.

In some implementation manners, the apparatus further includes: a first transmitting unit 22 configured to feed a response message back to the transmitting terminal by using one of the following beam groups: beam groups used before carrying the M beam group number indicators; M1 beam groups corresponding to the M beam group number indicators, wherein M1 is an integer greater than or equal to 1, and is less than or equal to M; and a first beam group in the M beam groups of the M beam group number indicators.

In some implementation manners, the apparatus further includes: a second grouping unit 23 configured to execute beam grouping; wherein the first transmitting unit 21 may further be configured to notify a grouping result obtained by the second grouping unit to the transmitting terminal, the grouping result containing the M beam group number indicators.

Accordingly, the embodiment further provides an apparatus for scanning and switching beams, including: a processor and a memory, wherein the apparatus is applied to a reference signal receiving terminal, and the memory stores a computer-executable instruction, and the computer-executable instruction, when being executed by the processor, implements the following method:
executing one of the followings by using beam groups corresponding to M beam group number indicators:
switching of a beam from a control channel and/or a data channel to a corresponding beam group;
beam scanning in the corresponding beam group;
channel quality measurement in the corresponding beam group; and
channel quality feedback in the corresponding beam group;
wherein the M beam group number indicators are notified to the receiving terminal by a reference signal transmitting terminal, and M is an integer greater than or equal to 1.

The above-mentioned apparatus for scanning and switching beams provided by the embodiment can be used for performing all the processes of the above described methods, and will not be elaborated herein.

According to the method for scanning and switching beams in the embodiment, the reference signal transmitting terminal can instruct the receiving terminal to receive the beam groups by an explicit or implicit way, and instruct the receiving terminal to execute the corresponding beam scanning and/or channel measurement, thus realizing the beam training and channel quality measurement on the transmitting and receiving beams under a specific independent path by the transmitting terminal and the receiving terminal. In this way, on the one hand, the beam refining or beam tracking for each independent path can be realized; and on the other hand, when the transmission path is blocked, the transceiver can make measurement and maintenance with respect to other beam groups in time to support effective beam switching.

The method and the apparatus according to the embodiment are particularly suitable for beam scanning in high-frequency 5G mobile communication or millimeter wave communication scenes.

### Third embodiment

The present embodiment provides a method for responding, applied to a terminal, including:
receiving, by the terminal, a signaling transmitted by a base station, generating a first effective time of the signaling, and transmitting the first effective time to the base station; the signaling carrying M beam group number indicators, M being an integer greater than or equal to 1, and the M beam group number indicators being used to indicate the terminal to execute one or more of the followings: switching of a beam from a control channel and/or a data channel to a corresponding beam group; beam scanning in the corresponding beam group; channel quality measurement in the corresponding beam group; and channel quality feedback in the corresponding beam group.

The effective time includes: #1 effective immediately; and #2 in K time units, wherein K is an integer greater than or equal to 0.

In some implementation manners, the signaling may be: a beam measurement signaling, a beam switching signaling, or a beam quality feedback signaling.

In some implementation manners, resource information used by the first effective time is carried in the signaling.

In some implementation manners, the signaling carries a second effective time suggested by the base station, and when the second effective time is less than the first effective time, the terminal transmits the first effective time to the base station before the second effective time.

In some implementation manners, the signaling carries a second effective time suggested by the base station, and when the second effective time is greater than the first effective time, the terminal stops transmitting the first effective time to the base station.

In some implementation manners, transmitting the first effective time to the base station includes one of the followings: 1) explicit feedback manner: carrying the first effective time in a notification message in the form of information, and transmitting the notification message to the base station; and 2) implicit feedback manner: indicating the first effective time by a location where a time-frequency resource carrying the notification message is located or by a designated sequence.

Accordingly, as shown in Fig. 3, the embodiment further provides an apparatus for responding, applied to a terminal, including:
a second receiving unit 31 configured to receive a signaling transmitted by a base station;
a first generating unit 32 configured to generate a first effective time of the signaling; and
a second transmitting unit 33 configured to transmit the first effective time to the base station;
wherein, the signaling carries M beam group number indicators, M being an integer greater than or equal to 1, and the M beam group number indicators being used to instruct the terminal to execute one or more of the followings: switching of a beam from a control channel and/or a data channel to a corresponding beam group; beam scanning in the corresponding beam group; channel quality measurement in the corresponding beam group; and channel quality feedback in the corresponding beam group.

In some implementation manners, the signaling carries a second effective time suggested by the base station. The second transmitting unit 33 is configured to transmit the first effective time to the base station before the second effective time when the second effective time is less than the first effective time, or stop transmitting the first effective time to the base station when the second effective time is greater than the first effective time.

In some implementation manners, the second transmitting unit 33 is configured to transmit the first effective time to the base station through one of the following manners: 1) carrying the first effective time in a notification message in the form of information, and transmitting the notification message to the base station; and 2) indicating the first effective time by a location where a time-frequency resource carrying the notification message is located or by a designated sequence.

Accordingly, the present embodiment further provides an apparatus for responding, including: a processor and a memory, wherein the apparatus is applied to a terminal, and the memory stores a computer-executable instruction which, when being executed by the processor, implements the following method:
receiving a signaling transmitted by a base station;
generating a first effective time of the signaling; and
transmitting the first effective time to the base station;
the signaling carrying M beam group number indicators, M being an integer greater than or equal to 1, and the M beam group number indicators being used to instruct the terminal to execute one or more of the followings: switching of a beam from a control channel and/or a data channel to a corresponding beam group; beam scanning in the corresponding beam group; channel quality measurement in the corresponding beam group; and channel quality feedback in the corresponding beam group.

In the present embodiment, the terminal notifies the effective time of the signaling to the base station, which can improve the flexibility of the terminal side.

### Fourth embodiment

The present embodiment provides a method for feeding back antenna configuration information, applied to a terminal, including:
feeding back, by the terminal, an antenna parameter to a base station side.
wherein the antenna parameter is used to configure an uplink codebook which is used to generate uplink beams and/or beam groups.

In some implementation manners, the antenna parameter includes one or a combination of more than one of the followings:
1) the number of antenna ports;
2) the dimension of a 2-D antenna group codebook and the number of the 2-D antenna group codebooks;
3) the dimension of a 2-D beam codebook and the number of the 2-D beam codebooks in the antenna group;
4) the dimension of a large bandwidth-oriented codebook and the number of the large bandwidth-oriented codebooks;
5) the dimension of a small bandwidth-oriented codebook and the number of the small bandwidth-oriented codebooks;
6) the dimension of a polarization-oriented codebook and the number of the polarization-oriented codebooks;
7) precision of codebook quantization;
8) whether a downlink received codebook being associated with all or any codebook in 2) to 5);
9) the number of antenna panels, the number of rows of the antenna panels, the number of rows and columns of the antenna panels, and a directional topology shape;
10) the number of rows of antenna elements in the antenna panels;
11) the number of columns of antennas in the antenna panels; and
12) a polarization feature of the antennas.

In an implementation manner, the precision of codebook quantization (or called codebook oversampling, codebook quantization phase distance) includes an oversampling size of a Discrete Fourier Transform (DFT) codebook.

In an implementation manner, the method further includes: executing codebook grouping, the codebook grouping being indicated by a codebook grouping indicator, and all or some of codebooks in the same codebook group are used for receiving or transmitting a transmission.

In an implementation manner, the antenna polarization characteristics include: horizontal polarization, vertical polarization, clockwise circular polarization, anticlockwise circular polarization, etc.

Accordingly, as shown in Fig. 4, the present embodiment further provides an apparatus for feeding back antenna configuration information, applied to a terminal, including: a third transmitting unit 41 configured to feed an antenna parameter back to a base station side.

Accordingly, the present embodiment further provides an apparatus for feeding back antenna configuration information, including: a processor and a memory, wherein the apparatus is applied to a terminal, and the memory stores a computer-executable instruction which, when being executed by the processor, implements the following method: feeding an antenna parameter back to a base station side.

The present embodiment further provides a method for configuring an antenna, applied to a base station, including:
receiving an antenna parameter fed back by a terminal; and
configuring an antenna according to the antenna parameter.

In an implementation manner, configuring the antenna includes one or a combination of more than one of the followings:
setting an uplink beam and a downlink beam of the terminal to be the same, or allowing difference of the angle between the uplink beam and the downlink beam to be smaller than a threshold;
configuring an uplink codebook of the terminal; and
setting a binding relation between the uplink beam of the terminal and the uplink codebook.

Configuring the uplink codebook of the terminal is implemented through one of the following manners:
1) feeding back a codebook set of the uplink codebook to the terminal; and
2) indicating a sub-codebook for forming the uplink codebook and a method of synthesizing the codebook thereof to the terminal.

Setting the binding relation between the uplink beam of the terminal and the uplink codebook includes: reconfiguring elements of the uplink codebook based on uplink beam selection information; and setting a range of choice of the uplink codebook and/or the sub-codebook based on the uplink beam selection information, the sub-codebook being used for forming the uplink codebook.

A manner of synthesizing the codebook by the sub-codebook may include synthesizing at least one sub-codebook through a Kronecker product.

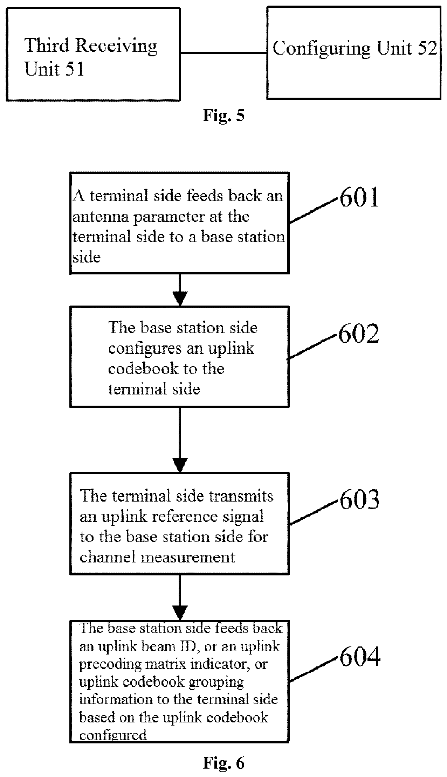

Accordingly, as shown in Fig. 5, the present embodiment further provides an apparatus for configuring an antenna, applied to a base station, including:
a third receiving unit 51 configured to receive an antenna parameter fed back by a terminal; and
a configuring unit 52 configured to configure an antenna according to the antenna parameter.

Accordingly, the embodiment further provides an apparatus for configuring an antenna, including: a processor and a memory, wherein the apparatus is applied to a base station, and the memory stores a computer-executable instruction which, when being executed by the processor, implements the following method:
receiving an antenna parameter fed back by a terminal; and
configuring an antenna according to the antenna parameter.

As shown in Fig. 6, the method according to the embodiment may include the following steps.

In step 601, since the antenna configuration at a terminal side is uncertain, the design complexity of the corresponding uplink codebook is very high. Therefore, in the present embodiment, the terminal side feeds back the antenna parameter of the terminal side to a base station side.

In step 602, the base station side configures an uplink codebook to the terminal side based on the existing antenna parameter information of the terminal side.

In step 603, based on the uplink codebook, the terminal transmits an uplink reference signal to the base station side for channel measurement.

In step 604, based on the uplink codebook configured, the base station side feeds back an uplink beam ID, or an uplink precoding matrix indicator, or uplink codebook grouping information to the terminal side.

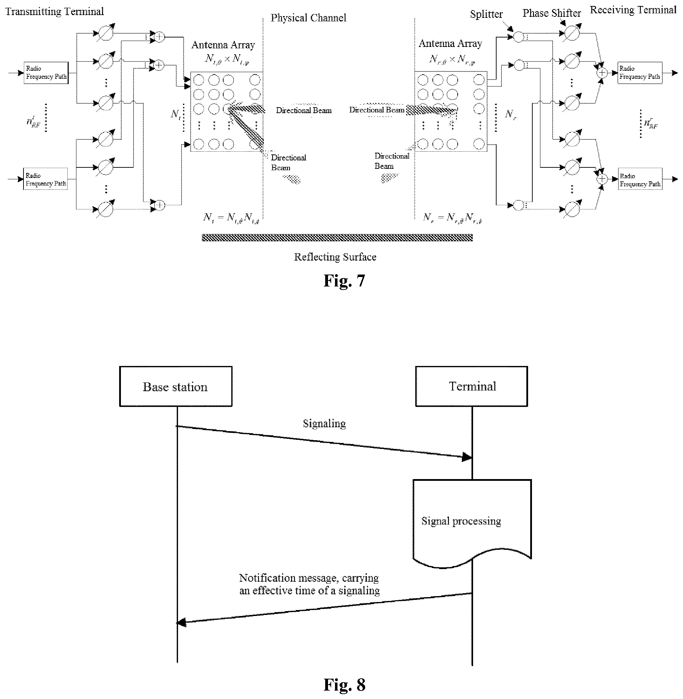

The present application is applied to a hybrid precoding (hybrid analog digital beamforming) transceiver shown in Fig. 7, which includes a reference signal transmitting terminal and a reference signal receiving terminal. The transmitting terminal and the receiving terminal are configured with multiple antenna arrays and multiple radio frequency paths. Each radio frequency path is connected to the antenna arrays (not excluding partial connection scenarios), and each antenna array has a phase shifter and a splitter. By loading signals on each antenna array with different phase shifts, a high-frequency system realizes Beamforming at an analog end. In the hybrid beamforming transceiver, there are multiple radio frequency signal streams. Each signal stream is loaded with an antenna weight vector (AWV) through the phase shifter and transmitted from the multi-antenna arrays to a high-frequency physical propagation channel. At the receiving terminal, the radio frequency signal streams received by the multi-antenna array are weighted and combined into a single signal stream. After radio frequency demodulation at the receiving terminal, the receiving terminal finally obtains a plurality of received signal streams, which are sampled and received by a digital baseband. Therefore, the above-mentioned transceiver can simultaneously generate radio frequency beams pointing to multiple directions.

Fig. 8 is a schematic diagram of an effective time of a signaling carried by a notification message. A base station side transmits a signaling to the terminal side, such as beam switching, beam scanning, feedback channel state information and other related signaling. The terminal feeds back the notification message to the base station side, and the notification message carries the effective time of the signaling transmitted by the base station, e.g., effective immediately or effective after K time units (e.g., Transmission Time Interval (TTI)), wherein K is an integer greater than or equal to 0. The effective time information can be fed back by an explicit manner (i.e., directly carrying the effective time information in the notification message), or indicated by a location where a time-frequency resource carrying the notification message is located or by a designated sequence.

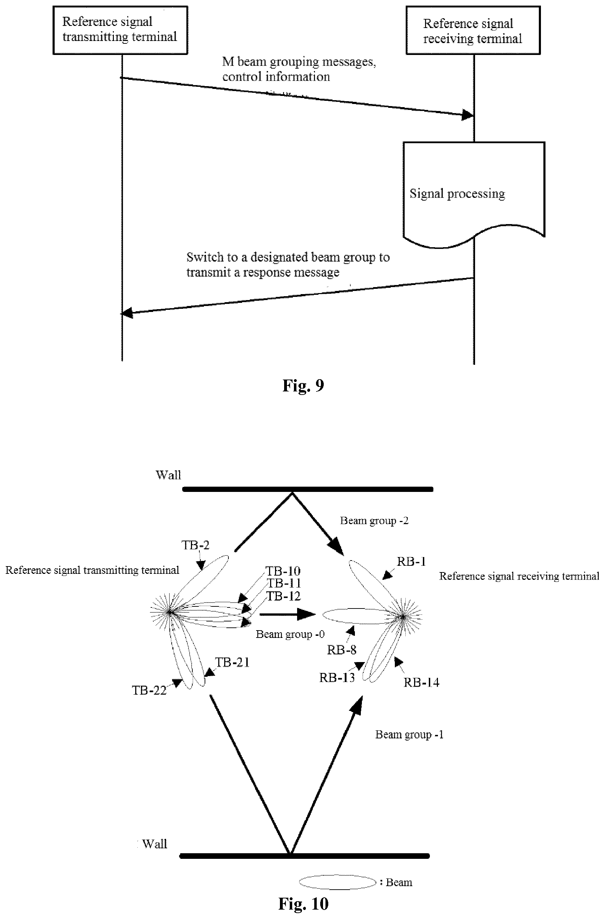

Fig. 9 is a schematic diagram of transmitting a response message after switching to a designated beam group. A reference signal transmitting terminal transmits M beam group messages and control information, and the reference signal transmitting terminal notifies the receiving terminal of the beams to be used in order to measure the switched beams, wherein the beams to be used may include one of the followings:
beam groups recently used before carrying the M beam group number indicators;
M1 beam groups corresponding to the M beam group number indicators, wherein M1 is an integer greater than or equal to 1; and
a first beam group in the M beam groups corresponding to the M beam group number indicators.

Fig. 10 is a schematic diagram of beam groups. A reference signal transmitting terminal and a reference signal receiving terminal are configured with a plurality of beam groups facing different physical paths through previous beam training. Each group includes one or more transmitting and receiving beams. It should be noted that the reference signal transmitting terminal and the reference signal receiving terminal only know the beam group numbers and do not know the receiving and transmitting beams used by the other party; thus, more flexibility can be brought to the transmitting terminal and the receiving terminal.

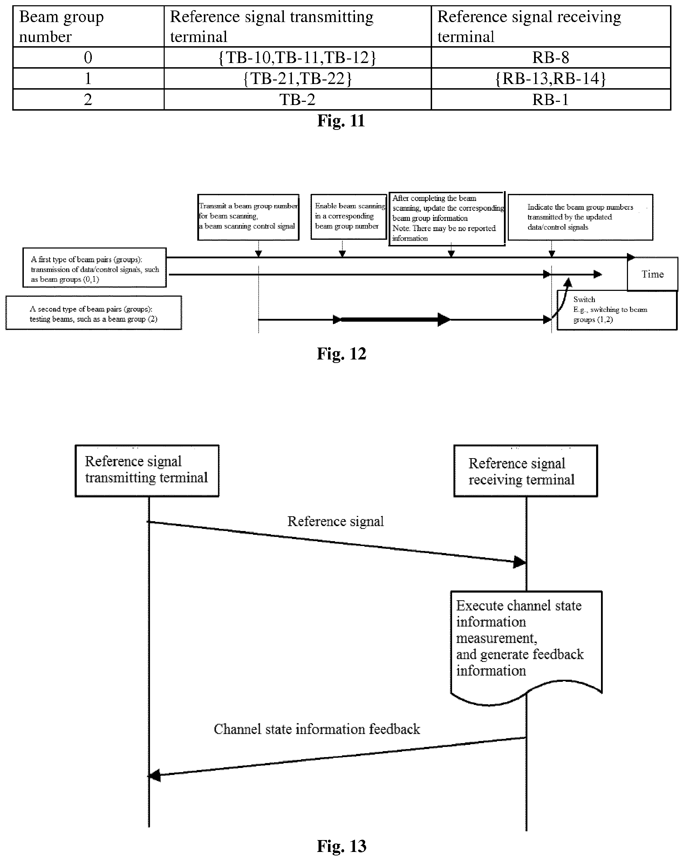

Fig. 11 is an embodiment of beam groups according to the present application, wherein TB represents transmitting beams of a reference signal transmitting terminal, while RB represents receiving beams of a reference signal receiving terminal. Based on the situation described in Fig. 10, there are three different beam groups, for example, in the beam group-0, the transmitting beams of the reference signal transmitting terminal are {TB-10, TB-11, TB-12}, while the receiving beam of the reference signal receiving terminal is RB-8.

Fig. 12 illustrates a schematic diagram of a method for scanning beams. First, the reference signal transmitting terminal and the reference signal receiving terminal perform transmission of data and control signals in a first type of beam groups through priori information. Then, when the channel quality deteriorates, and it is expected to switch a transmission mode or further refine the beams, the reference signal transmitting terminal transmits a beam group number to be scanned and a beam scanning control signal. Thereafter, beam scanning in a corresponding beam group number is started, and the corresponding beam group information (e.g., Reference Signal Receiving Power (RSRP) under different transmitting and receiving beam pairs; it should be noted that there may be no reported information) is updated after the beam scanning is completed. Then, if beam group switching is required, the reference signal transmitting terminal or the reference signal receiving terminal instructs the beam group numbers transmitted by the updated data/control signal.

The beam scanning control signal includes one or a combination of several of the followings:
#1 an indicator for enabling beam scanning at the transmitting terminal, and an indicator for the number of scanned beams (or an abstract indicator for the number of scanned beams);
#2 an indicator for enabling beam scanning at the receiving terminal, and an indicator for the number of scanned beams (or an abstract indicator for the number of scanned beams);
#3 an indicator for enabling joint beam scanning at the transmitting and receiving terminals, a corresponding relation between scanning transmitting beams and scanning receiving beams, and an indicator for the number of scanned beams (or an abstract indicator for the number of scanned beams);
#4 an indicator for enabling beam scanning at the transmitting terminal, an indicator for the number of scanned beams (or an abstract indicator for the number of scanned beams), and a binding relation between the beams scanned and a corresponding antenna port;
#5 an indicator for enabling beam scanning at the receiving terminal, an indicator for the number of scanned beams (or an abstract indicator for the number of scanned beams), and a binding relation between the beams scanned and a corresponding antenna port; and
#6 an indicator for enabling joint beam scanning at the transmitting receiving terminals, a corresponding relation between scanning transmitting beams and scanning receiving beams, an indicator for the number of scanned beams (or an abstract indicator for the number of scanned beam), and a binding relation between the beams scanned and a corresponding antenna port.

Moreover, the beam group numbers to be scanned and the beam scanning control signal can be transmitted through downlink control information carried by the reference signal transmitting terminal, or uplink control information, or media access control frames.

The binding relation between the beams scanned and the corresponding antenna port may possibly include the followings:
1) explicit expressing: being expressed as information of the corresponding relation between the beams scanned and the antenna port, the information of the corresponding relation between the beams scanned and the antenna port including a situation that all the beams scanned use the same antenna port; and
2) implicit expressing: mapping the corresponding relation between the beams scanned and the antenna port through a specified function and configuration parameters.

In an implementation manner, the beam group numbers and the beam scanning control signal can be transmitted through downlink control information carried by the reference signal transmitting terminal, or uplink control information, or media access control frames.

For example, in an initial state, beam groups (0,1) are used for transmitting data from control and data channels. Beam scanning and channel measurement related to a beam group (2) are executed due to the quality deterioration of received signals. According to the channel quality information fed back by the reference signal receiving terminal, the reference signal transmitting terminal initiates beam switching and uses the beam groups (1,2) to carry out subsequent transmission of data and control channels. It should be noted that the reference signal transmitting terminal initiates the beam switching, and after the receiving terminal responds to the beam switching, the beam switching can occur immediately or at a later point according to the protocol.

Fig. 13 is a schematic diagram illustrating flow charts of precoding (beam) training and channel state information feedback according to the present application. A reference signal transmitting terminal is generated by the same originating precoding (beam) group, or by different originating precoding (beam) groups, or multiple reference signals are respectively generated by several originating precoding (beam) groups, and transmitted to the reference signal receiving terminal. The reference signal receiving terminal performs channel measurement with the same or different terminating antenna weights under one or more reference signals, and feeds back corresponding channel state information. Scenes without feeding back the channel state information are allowed, such as training of the receiving beams corresponding to the reference signal receiving terminal.

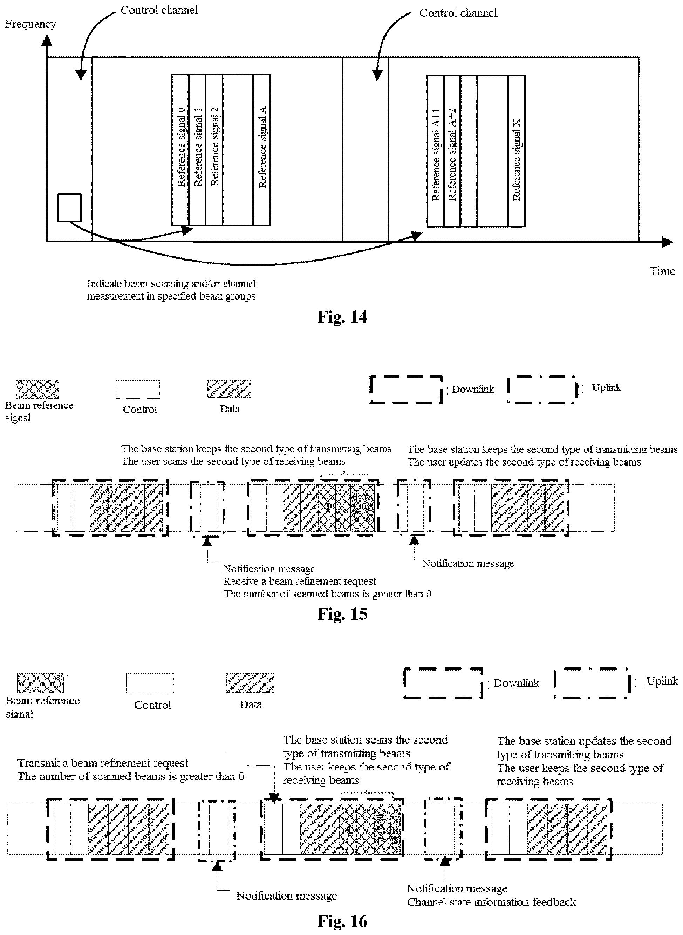

Fig. 14 is a schematic diagram illustrating a mapping relationship between a frame structure of the present application and a control signal and a reference signal. Time-frequency resources which are subsequently used for indicating reference signals under beam groups are indicated through indication information carried in the control channel. Meanwhile, the control signal is allowed to indicate reference signals under different TTIs.

Fig. 15 is an embodiment of the present application on downlink receiving beam scanning oriented to specific beam groups (i.e., a second type of beam groups). During uplink ACK, a Beam Refinement Request (BRF-RX Requested) is carried, and the number of scanned beams (BRF-LEN) received is greater than 0. Then, during downlink data transmission, a loading BS end uses a transmitting reference signal under the specific beam groups (i.e., the second type of beam groups), while a UE end scans selectable receiving beams under the specific beam groups, thereby updating the receiving beams at a BS side under the beam groups.

Fig. 16 is an embodiment of the present application on downlink transmitting beam scanning oriented to specific beam groups (i.e., a second type of beam groups). A BRF-TX Request is carried in an uplink control field, and the number of scanned beams BRF-LEN transmitted is greater than 0. During downlink data transmission, a BS end scans selectable transmitting beams under the specific beam groups (i.e., the second type of beam groups) and transmits a reference signal, while a UE end fixes receiving beams under the specific beam groups. Then, during ACK feedback, the UE feeds back CSI information feedback under each reference signal to the BS in an uplink manner.

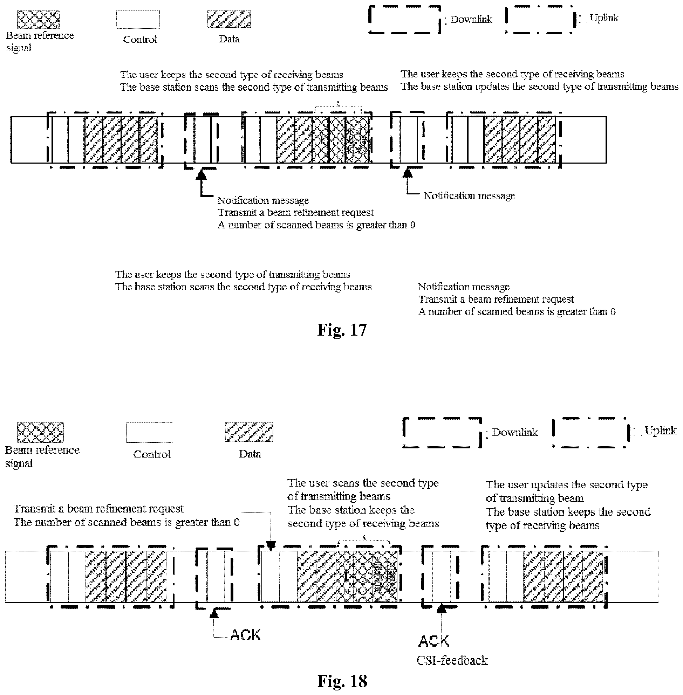

Fig. 17 is an embodiment of the present application on uplink receiving beam scanning oriented to specific beam groups (i.e., a second type of beam groups). During downlink ACK, a BRF-RX Requested is carried, and the number of scanned beams BRF-LEN received is greater than 0. Then, during uplink data transmission, a loading UE end uses a transmitting reference signal under the specific beam groups (i.e., the second type of beam groups), while a BS end scans selectable receiving beams under the specific beam groups, thereby updating the receiving beams at a BS side under the beam groups.

Fig. 18 is an embodiment of the present application on uplink transmitting beam scanning under the second type of beam groups oriented to specific beam groups (i.e., a second type of beam groups). A BRF-TX Request is carried in a downlink control field, and the number of scanned beams BRF-LEN transmitted is greater than 0. During downlink data transmission, a UE end scans selectable transmitting beams under the specific beam groups (i.e., the second type of beam groups) and transmits a reference signal, while a BS end fixes receiving beams under the specific beam groups. Then, during ACK feedback, CSI information feedback under each reference signal is fed back to the BS in a downlink manner.

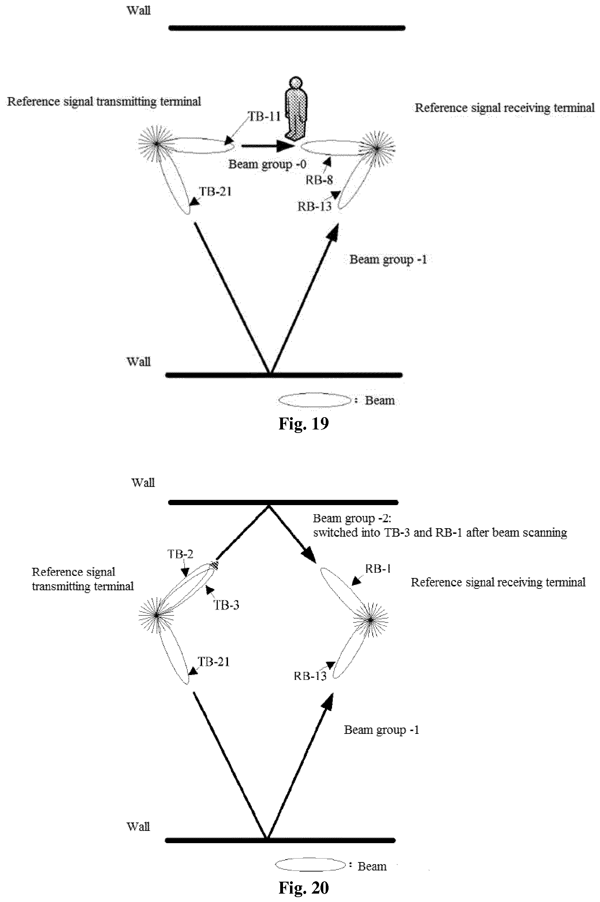

Fig. 19 is a schematic diagram of a transmission at transmitting and receiving terminals where channel quality deteriorates due to blocking. Reference signal transmitting and receiving terminals use a beam group-0 and a beam group-1 for space division multiplexing. However, due to the blocking of a human body, the quality of the received signal under the beam group-0 decreases greatly, so the reference signal transmitting and receiving terminals try to switch to the beam group -2.

Fig. 20 is a schematic diagram of a transmission at the transmitting and receiving terminals after beam scanning in the beam groups. By executing the proposed methods for scanning beams, a beam group-2 is optimized, and a TB-2 of the original reference signal transmitting terminal is switched to TB-3, and TB-3 and RB-1 are used to form the beam group-2 to execute data transmission.

In conclusion, based on the embodiments of the present disclosure, the reference signal transmitting terminal can instruct the receiving terminal to receive the beams (groups) by an explicit or implicit way, and instruct the receiving terminal to execute the corresponding beam scanning and/or channel measurement, thus realizing the beam training and channel quality measurement on the transmitting and receiving beams under a specific independent path by the reference signal transmitting terminal and the reference signal receiving terminal. Through the solution, on the one hand, the beam refining or beam tracking for each independent path can be realized; and on the other hand, when the transmission path is blocked, the transceiver can make measurement and maintenance with respect to other beam groups in time to support effective beam switching.

Moreover, the embodiments of the present disclosure also provide a computer readable storage medium storing a computer-executable instruction which, when being executed by a processor, implements one of the above-mentioned methods for scanning and switching beams.

Moreover, the embodiments of the present disclosure also provide a computer readable storage medium storing a computer-executable instruction which, when being executed by a processor, implements another of the above-mentioned methods for scanning and switching beams.

Moreover, the embodiments of the present disclosure also provide a computer readable storage medium storing a computer-executable instruction which, when being executed by a processor, implements the above-mentioned method for responding.

The embodiments of the present disclosure also provide a computer readable storage medium storing a computer-executable instruction which, when being executed, implements the above-mentioned method for feeding back an antenna parameter.

Moreover, the embodiments of the present disclosure also provide a computer readable storage medium storing a computer-executable instruction which, when being executed, implements the above-mentioned method for configuring an antenna.

In the embodiment, the above-mentioned storage medium may include, but is not limited to: any medium that is capable of storing program codes, such as a USB disk, a Read-Only Memory (ROM), a Random Access Memory (RAM), a mobile hard disk, a magnetic disk or an optical disk, and the like.

In the embodiment, the processor executes the method steps of the foregoing embodiments according to the program codes stored in the storage medium.

For examples in the embodiment, reference may be made to the examples described in the foregoing embodiments and implementation manners, which will not be elaborated herein in the embodiment.

It is to be understood by those having ordinary skills in the art that all or part of the steps mentioned above can be completed by related hardware instructed (such as a processor) by a program which can be stored in a computer readable storage medium, such as a read-only memory, a magnetic disk or an optical disc. All or part of the steps of the foregoing embodiments can also be implemented by one or more integrated circuits. Accordingly, each module/unit in the foregoing embodiments can be implemented in hardware, for example, through an integrated circuit to achieve corresponding functions thereof, or in the form of a software function module, for example, by the processor to execute programs/instructions stored in the memory to achieve corresponding functions thereof. The present application is not limited to a combination of hardware and software in any particular form.

The above shows and describes the basic principles and main features of the present application and the advantages of the present application. The present application is not limited by the foregoing embodiments. Those described in foregoing embodiment embodiments and specification are only to illustrate the principles of the present application. Various changes and improvements will be made to the present application without departing from the spirit and scope of the present application, all of which shall fall within the scope of the claimed application.

### INDUSTRIAL APPLICABILITY

Through the present application, the reference signal transmitting terminal can instruct the receiving terminal to receive the beam groups by an explicit or implicit way, and instruct the receiving terminal to execute at least one of the corresponding beam scanning and channel measurement, thus realizing the beam training and channel quality measurement on the transmitting and receiving beams under a specific independent path by the transmitting terminal and the receiving terminal. In this way, on the one hand, the beam refining or beam tracking for each independent path can be realized; and on the other hand, when the transmission path is blocked, the transceiver can make measurement and maintenance with respect to other beam groups in time to support effective beam switching.

## Claims

1. A method for scanning and switching beams, applied to a reference signal transmitting terminal, comprising:
notifying, by the transmitting terminal, M beam group number indicators to a receiving terminal, wherein M is an integer greater than or equal to 1, and the M beam group number indicators are used to instruct the reference signal receiving terminal to execute one or more of the followings:
switching of a beam from a control channel to a corresponding beam group;
switching of a beam from a data channel to a corresponding beam group;
switching of beams from a control channel and a data channel to corresponding beam groups;
beam scanning in a corresponding beam group;
channel quality measurement in a corresponding beam group; and
channel quality feedback in a corresponding beam group.

2. The method according to claim 1, wherein,
the method, before notifying the M beam group number indicators to the receiving terminal, further comprises: executing beam grouping to obtain a grouping result, the grouping result containing the M beam group number indicators.

3. The method according to claim 1, wherein the method, before notifying the M beam group number indicators to the receiving terminal, further comprises:
receiving a beam grouping result from the receiving terminal, the grouping result containing the M beam group number indicators.

4. The method according to claim 1, further comprising:
when the transmitting terminal notifies the M beam group number indicators to the receiving terminal, transmitting a request indicator of switching to a second type of beam groups; and meanwhile, keeping a first type of beam groups undertaking a data transmission service until the receiving terminal makes a response that the beam groups are or have been switched to the second type of beam groups;
wherein the first type of beam groups are beam groups that are currently undertaking the data transmission service, and the first type of beam groups comprise K2 beam groups; and the second type of beam groups correspond to the M beam group number indicators, the second type of beam groups comprise K1 beam groups, K1 and K2 are integers no less than 1, and K1 is no greater than M.

5. The method according to claim 1, further comprising:
when the transmitting terminal notifies the M beam group number indicators to the receiving terminal, transmitting an indicator of beam scanning of a second type of beam groups; and meanwhile, keeping a first type of beam groups undertaking a data transmission service until the receiving terminal makes a response that the beam groups are or have been switched to the second type of beam groups;
wherein the first type of beam groups are beam groups that are currently undertaking the data transmission service, and the first type of beam groups comprise K2 beam groups; and the second type of beam groups correspond to the M beam group number indicators, the second type of beam groups comprise K1 beam groups, K1 and K2 are integers no less than 1, and K1 is no greater than M.

6. The method according to claim 1, further comprising:
when the transmitting terminal notifies the M beam group number indicators to the receiving terminal, keeping a first type of beam groups undertaking a data transmission service until the receiving terminal makes a response that the beam groups are or have been switched to the second type of beam groups;
wherein the first type of beam groups are beam groups that are currently the data transmission service, and the first type of beam groups comprise K2 beam groups; and the second type of beam groups correspond to the M beam group number indicators, the second type of beam groups comprise K1 beam groups, K1 and K2 are integers no less than 1, and K1 is no greater than M.

7. The method according to claim 4, 5 or 6, further comprising:
transmitting, by the transmitting terminal, a reference signal through the second type of beam groups and beams adjacent to the second type of beam groups, the reference signal being used for channel quality measurement in the second type of beam groups and in the beams adjacent to the second type of beam groups; or,
transmitting, by the transmitting terminal, a reference signal through the second type of beam groups, the reference signal being used for channel quality measurement in the second type of beam groups; or,
transmitting, by the transmitting terminal, a reference signal through the beams adjacent to the second type of beam groups, the reference signal being used for channel quality measurement in the beams adjacent to the second type of beam groups.

8. The method according to claim 1 or 5, wherein the beam scanning comprises transmitting a beam scanning control signal, and the beam scanning control signal comprises one of the followings:
an indicator for enabling beam scanning at the transmitting terminal, and an indicator for the number of scanned beams;
an indicator for enabling beam scanning at the receiving terminal, and an indicator for the number of scanned beams;
an indicator for enabling joint beam scanning jointly enabled at the transmitting and receiving terminals, a corresponding relation between scanning transmitting beams and scanning receiving beams, and an indicator for the number of scanned beams;
an indicator for enabling beam scanning at the transmitting terminal, an indicator for the number of scanned beams, and a binding relation between the beams scanned and a corresponding antenna port;
an indicator for enabling beam scanning at the receiving terminal, an indicator for the number of scanned beams, and a binding relation between the beams scanned and a corresponding antenna port; and
an indicator for enabling joint beam scanning at the transmitting and receiving terminals, a corresponding relation between scanning transmitting beams and scanning receiving beams, an indicator for the number of scanned beams, and a binding relation between the beams scanned and a corresponding antenna port.

9. The method according to claim 8, wherein the binding relation between the beams scanned and the corresponding antenna port is expressed in one of the following ways:
being expressed as information of the corresponding relation between the beams scanned and the antenna port, the corresponding relation between the beams scanned and the antenna port comprising a situation that all the beams scanned use the same antenna port; and
mapping the corresponding relation between the beams scanned and the antenna port through a specified function and configuration parameters.

10. The method according to claim 1, further comprising:
instructing, by the transmitting terminal, the receiving terminal to switch receiving beams to K beam groups, wherein K is an integer greater than or equal to 1, and M is greater than or equal to K.

11. An apparatus for scanning and switching beams, applied to a reference signal transmitting terminal, comprising:
a first notifying unit configured to notify M beam group number indicators to a receiving terminal, wherein M is an integer greater than or equal to 1, and the M beam group number indicators are used to instruct the receiving terminal to execute one or more of the followings:
switching of a beam from a control channel to a corresponding beam group;
switching of a beam from a data channel to a corresponding beam group;
switching of beams from a control channel and a data channel to corresponding beam groups;
beam scanning in the corresponding beam group;
channel quality measurement in the corresponding beam group; and
channel quality feedback in the corresponding beam group.

12. The apparatus according to claim 11, further comprising:
a first grouping unit configured to execute beam grouping to obtain a grouping result, the grouping result containing the M beam group number indicators; or,
a first receiving unit configured to receive a beam grouping result from the receiving terminal, the grouping result containing the M beam group number indicators.

13. The apparatus according to claim 11, wherein:
the first notifying unit is further configured to transmit an indicator of beam scanning of a second type of beam groups when notifying the M beam group number indicators to the receiving terminal, or transmit an indicator of beam scanning of a second type of beam groups when notifying the M beam group number indicators to the receiving terminal; and
the apparatus further comprises a control unit configured to keep a first type of beam groups undertaking a data transmission service until the receiving terminal makes a response that the beam groups are or have been switched to the second type of beam groups;
wherein the first type of beam groups are beam groups that are currently undertaking the data transmission service, and the first type of beam groups comprise K2 beam groups; the second type of beam groups correspond to the M beam group number indicators, the second type of beam groups comprise K1 beam groups, K1 and K2 are integers no less than 1, and K1 is no greater than M.

14. The apparatus according to claim 11, wherein:
the notifying unit is further configured to:
transmit a reference signal through the second type of beam groups and beams adjacent to the second type of beam groups, the reference signal being used for channel quality measurement in the second type of beam groups and in the beams adjacent to the second type of beam groups; or,
transmit a reference signal through the second type of beam groups, the reference signal being used for channel quality measurement in the second type of beam groups; or,
transmit a reference signal through the beams adjacent to the second type of beam groups, the reference signal being used for channel quality measurement in the beams adjacent to the second type of beam groups.

15. An apparatus for scanning and switching beams, comprising: a processor and a memory, wherein the apparatus is applied to a reference signal transmitting terminal, and the memory stores a computer-executable instruction which, when being executed by the processor, implements the following method:
notifying M beam group number indicators to a receiving terminal, wherein M is an integer greater than or equal to 1, and the M beam group number indicators are used to instruct the receiving terminal to execute one or more of the followings:
switching of a beam from a control channel to a corresponding beam group;
switching of a beam from a data channel to a corresponding beam group;
switching of beams from a control channel and a data channel to corresponding beam groups;
beam scanning in a corresponding beam group;
channel quality measurement in a corresponding beam group; and
channel quality feedback in a corresponding beam group.

16. A method for scanning and switching beams, applied to a reference signal receiving terminal, comprising:
executing, by the receiving terminal, one of the followings by using beam groups corresponding to M beam group number indicators:
switching of a beam from a control channel to a corresponding beam group;
switching of a beam from a data channel to a corresponding beam group;
switching of beams from a control channel and a data channel to corresponding beam groups;
beam scanning in a corresponding beam group;
channel quality measurement in a corresponding beam group; and
channel quality feedback in a corresponding beam group;
wherein the M beam group number indicators are notified to the receiving terminal by a reference signal transmitting terminal, and M is an integer greater than or equal to 1.

17. The method according to claim 16, further comprising:
feeding, by the receiving terminal, a response message back to the transmitting terminal using one of the following beam groups:
beam groups used before carrying the M beam group number indicators;
M1 beam groups corresponding to the M beam group number indicators, wherein M1 is an integer greater than or equal to 1, and is less than or equal to M; and
a first beam group in the M beam groups of the M beam group number indicators.

18. The method according to claim 17, wherein a carrying manner of the beam group number indicators in the response message comprises one of the followings:
carrying information of the beam group number indicators in the response message; and
being indicated by a location where a time-frequency resource carrying the beam group number is located or by a designated sequence.

19. The method according to claim 17, wherein the response message contains an effective time for executing corresponding instructions of the M beam group number indicators.

20. The method according to 17, wherein:
the receiving terminal periodically feeds the response message back to the transmitting terminal; or,
the receiving terminal feeds the response message back to the transmitting terminal after the receiving terminal is triggered.

21. The method according to claim 16, wherein the method, before the using the beam groups corresponding to the M beam group number indicators, further comprises:
executing, by the receiving terminal, beam grouping, and notifying a grouping result to the transmitting terminal, the grouping result containing the M beam group number indicators.

22. The method according to claim 16, wherein the channel quality measurement in the corresponding beam group comprises:
receiving a reference signal transmitted by the transmitting terminal by using the beam groups corresponding to the M beam groups, and measuring channels in the M beam groups according to the reference signal.

23. The method according to claim 16, wherein the method, before the beam scanning in the corresponding beam group, further comprises:
configuring receiving beam groups for beam scanning according to the M beam group number indicators;
wherein the M beam group number indicators are carried in downlink control information, uplink control information or media access control frames.

24. The method according to claim 16, wherein the channel quality feedback in the corresponding beam group comprises:
feeding beam measurement results of all the M beam groups or K3 beam groups in the M beam groups back to the transmitting terminal, wherein K3 is an integer greater than or equal to 1, and is less than M.

25. An apparatus for scanning and switching beams, applied to a reference signal receiving terminal, comprising:
a first executing unit configured to execute one of the followings by using the beam groups corresponding to the M beam group number indicators:
switching of a beam from a control channel to a corresponding beam group;
switching of a beam from a data channel to a corresponding beam group;
switching of beams from a control channel and a data channel to corresponding beam groups;
beam scanning in the corresponding beam group;
channel quality measurement in the corresponding beam group; and
channel quality feedback in the corresponding beam group;
wherein the M beam group number indicators are notified to the receiving terminal by a reference signal transmitting terminal, and M is an integer greater than or equal to 1.

26. The apparatus according to claim 25, further comprising:
a first transmitting unit configured to feed a response message back to the transmitting terminal by using one of the following beam groups:
beam groups used before carrying the M beam group number indicators;
M1 beam groups corresponding to the M beam group number indicators, wherein M1 is an integer greater than or equal to 1, and is less than or equal to M; and
a first beam group in the M beam groups of the M beam group number indicators.

27. The apparatus according to claim 25,
further comprising: a second grouping unit configured to execute beam grouping, wherein:
the first transmitting unit is further configured to notify a grouping result obtained by the second grouping unit to the transmitting terminal, the grouping result containing the M beam group number indicators.

28. An apparatus for scanning and switching beams, comprising: a processor and a memory, wherein the apparatus is applied to a reference signal receiving terminal, and the memory stores a computer-executable instruction which, when being executed by the processor, implements the following method:
executing one of the followings by using beam groups corresponding to M beam group number indicators:
switching of a beam from a control channel to a corresponding beam group;
switching of a beam from a data channel to a corresponding beam group;
switching of beams from a control channel and a data channel to corresponding beam groups;
beam scanning in the corresponding beam group;
channel quality measurement in the corresponding beam group; and
channel quality feedback in the corresponding beam group;
wherein the M beam group number indicators are notified to the receiving terminal by a reference signal transmitting terminal, and M is an integer greater than or equal to 1.

29. A method for responding, applied to a terminal, comprising:
receiving, by the terminal, a signaling transmitted by a base station, generating a first effective time of the signaling, and transmitting the first effective time to the base station;
the signaling carrying M beam group number indicators, where M is an integer greater than or equal to 1, and the M beam group number indicators are used to indicate the terminal to execute one or more of the followings:
switching of a beam from a control channel to a corresponding beam group;
switching of a beam from a data channel to a corresponding beam group;
switching of beams from a control channel and a data channel to corresponding beam groups;
beam scanning in a corresponding beam group;
channel quality measurement in a corresponding beam group; and
channel quality feedback in a corresponding beam group.

30. The method according to claim 29, wherein the signaling is: a beam measurement signaling, a beam switching signaling, or a beam quality feedback signaling.

31. The method according to claim 29, wherein resource information used by the first effective time is carried in the signaling.

32. The method according to claim 29, wherein the signaling carries a second effective time suggested by the base station, and when the second effective time is less than the first effective time, the terminal transmits the first effective time to the base station before the second effective time.

33. The method according to claim 29, wherein the signaling carries a second effective time suggested by the base station, and when the second effective time is greater than the first effective time, the terminal stops transmitting the first effective time to the base station.

34. The method according to claim 29, wherein transmitting the first effective time to the base station comprises one of the followings:
carrying the first effective time in a notification message in the form of information, and transmitting the notification message to the base station; and
indicating the first effective time by a location where a time-frequency resource carrying the notification message is located or by a designated sequence.

35. An apparatus for responding, applied to a terminal, comprising:
a second receiving unit configured to receive a signaling transmitted by a base station;
a first generating unit configured to generate a first effective time of the signaling; and
a second transmitting unit configured to transmit the first effective time to the base station;
wherein the signaling carries M beam group number indicators, wherein M is an integer greater than or equal to 1, and the M beam group number indicators are used to instruct the terminal to execute one or more of the followings:
switching of a beam from a control channel to a corresponding beam group;
switching of a beam from a data channel to a corresponding beam group;
switching of beams from a control channel and a data channel to corresponding beam groups;
beam scanning in a corresponding beam group;
channel quality measurement in a corresponding beam group; and
channel quality feedback in a corresponding beam group.

36. The apparatus according to claim 35, wherein:
the signaling carries a second effective time suggested by the base station; and
the second transmitting unit is configured to transmit the first effective time to the base station before the second effective time when the second effective time is less than the first effective time, or stop transmitting the first effective time to the base station when the second transmitting unit is greater than the first effective time.

37. The apparatus according to claim 35 or 36, wherein the second transmitting unit is configured to transmit the first effective time to the base station through one of the following manners:
carrying the first effective time in a notification message in the form of information, and transmitting the notification message to the base station; and
indicating the first effective time by a location where a time-frequency resource carrying the notification message is located or by a designated sequence.

38. An apparatus for responding, comprising: a processor and a memory, wherein the apparatus is applied to a terminal, and the memory stores a computer-executable instruction which, when being executed by the processor, implements the following method:
receiving a signaling transmitted by a base station;
generating a first effective time of the signaling; and
transmitting the first effective time to the base station;
wherein the signaling carries M beam group number indicators, wherein M is an integer greater than or equal to 1, and the M beam group number indicators are used to indicate the terminal to execute one or more of the followings:
switching of a beam from a control channel to a corresponding beam group;
switching of a beam from a data channel to a corresponding beam group;
switching of beams from a control channel and a data channel to corresponding beam groups;
beam scanning in a corresponding beam group;
channel quality measurement in a corresponding beam group; and
channel quality feedback in a corresponding beam group.

39. A method for feeding back antenna configuration information, applied to a terminal, comprising:
feeding back, by the terminal, an antenna parameter to a base station side.

40. The method according to claim 39, wherein the antenna parameter is used to configure an uplink codebook which is used to generate at least one of a receiving beam, a receiving beam group, a transmitting beam and a transmitting beam group.

41. The method according to claim 39, wherein the antenna parameter comprises one or a combination of more than one of the followings:
1) the number of antenna ports;
2) the dimension of a 2-D antenna group codebook and the number of the 2-D antenna group codebooks;
3) the dimension of a 2-D beam codebook and the number of the 2-D beam codebooks in the antenna group;
4) the dimension of a large bandwidth-oriented codebook and the number of the large bandwidth-oriented codebooks;
5) the dimension of a small bandwidth-oriented codebook and the number of the small bandwidth-oriented codebooks;
6) the dimension of a polarization-oriented codebook and the number of the polarization-oriented codebooks;
7) precision of codebook quantization;
8) whether a downlink received codebook being associated with all or any codebook in 2) to 5);
9) the number of antenna panels, the number of rows of the antenna panels, the number of rows and columns of the antenna panels, and a directional topology shape;
10) the number of rows of antenna elements in the antenna panels;
11) the number of columns of antennas in the antenna panels; and
12) a polarization feature of the antennas.

42. The method according to 41, wherein:
the precision of codebook quantization comprises an oversampling size of a Discrete Fourier Transform DFT codebook.

43. The method according to claim 41, further comprising:
executing codebook grouping, the codebook grouping being indicated by a codebook grouping indicator, and all or some of codebooks in the same codebook group are used for receiving or transmitting a transmission.

44. An apparatus for feeding back antenna configuration information, applied to a terminal, comprising:
a third transmitting unit configured to feed an antenna parameter back to a base station side.

45. An apparatus for feeding back antenna configuration information, comprising: a processor and a memory, wherein the apparatus is applied to a terminal, and the memory stores a computer-executable instruction which implements the following method when being executed by the processor:
feeding an antenna parameter back to a base station side.

46. A method for configuring an antenna, applied to a base station, comprising:
receiving an antenna parameter fed back by a terminal; and
configuring an antenna according to the antenna parameter.

47. The method according to claim 46, wherein configuring the antenna comprises one or a combination of more than one of the followings:
setting an uplink beam and a downlink beam of the terminal to be the same, or allowing a difference of the angle between the uplink beam and the downlink beam to be smaller than a threshold;
configuring an uplink codebook of the terminal; and
setting a binding relation between the uplink beam of the terminal and the uplink codebook.

48. The method according to claim 47, wherein configuring the uplink codebook of the terminal is implemented through one of the following manners:
feeding back a codebook set of the uplink codebook to the terminal; and
indicating a sub-codebook for forming the uplink codebook and a method of synthesizing the codebook thereof to the terminal.

49. The method according to claim 47, wherein setting the binding relation between the uplink beam of the terminal and the uplink codebook comprises:
reconfiguring elements of the uplink codebook based on uplink beam selection information; and
setting a range of choice of at least one of the uplink codebook and the sub-codebook based on the uplink beam selection information, the sub-codebook being used for forming the uplink codebook.

50. An apparatus for configuring an antenna, applied to a base station, comprising:
a third receiving unit configured to receive an antenna parameter fed back by a terminal; and
a configuring unit configured to configure an antenna according to the antenna parameter.

51. An apparatus for configuring an antenna, comprising: a processor and a memory, wherein the apparatus is applied to a base station, and the memory stores a computer-executable instruction which implements the following method when being executed by the processor:
receiving an antenna parameter fed back by a terminal; and
configuring an antenna according to the antenna parameter.
